# EUROPÄISCHE PATENTSCHRIFT

(11) **EP 1 855 021 B1**
(45) Veröffentlichungstag und Bekanntmachung des Hinweises auf die Patenterteilung: **12.01.2011**
(21) Anmeldenummer: 07006355.7
(22) Anmeldetag: 28.03.2007
(51) Int. Cl.: F16D 48/06, F16H 61/688, B60W 30/18, B60W 10/02

(54) **Verfahren zum Anfahren bei Brennkraftmaschinen mit Doppelkupplungsgetriebe**
Method for starting up combustion engines with double coupling transmission
Procédé de démarrage pour moteurs à combustion interne dotés d'un engrenage à double embrayage

(30) Priorität: 29.04.2006 DE 102006020064
(43) Veröffentlichungstag der Anmeldung: 14.11.2007
(73) Patentinhaber: Dr. Ing. h.c. F. Porsche AG, 70435 Stuttgart (DE)
(72) Erfinder: Baur, Peter, 71297 Moensheim (DE); Esser, Joachim, 71277 Rutesheim (DE); Hauck, Christian, 71638 Ludwigsburg (DE); Kraxner, Dieter, 75449 Wurmberg (DE)

(56) Entgegenhaltungen:
- EP-A1- 1 507 092
- WO-A-03/074894
- WO-A-2004/033246
- DE-A1- 10 232 832
- DE-A1- 19 939 334

## Beschreibung

Die vorliegende Erfindung betrifft eine Brennkraftmaschine mit einem Kraftfahrzeugantriebsstrang, der eine Antriebseinheit, ein Getriebe mit wenigstens zwei Getriebeeingangswellen und eine Mehrfach-Kupplungseinrichtung, vorzugsweise eine Doppelkupplungseinrichtung, mit einer einer ersten Getriebeeingangswelle zugeordneten ersten Kupplungsanordnung und einer einer zweiten Getriebeeingangswelle zugeordneten zweiten Kupplungsanordnung zur Momentenübertragung zwischen der Antriebseinheit und der Abtriebseinheit, in diesem Fall der Kardanwelle, welche die Kraft an das Fahrwerk überträgt.

Brennkraftmaschinen mit Doppelkupplungsgetrieben sind beispielsweise bereits aus der DE 100 04 179 A1 und der EP 1 298 341 A2 bekannt. Die WO 2004/033 246 A zeigt die Merkmale des Oberbegriffs von Anspruch 1.

Antriebsstränge mit Doppelkupplungseinrichtungen und Lastschaltgetrieben haben den Vorteil, dass sie bei einer entsprechenden Automatisierung der Schaltvorgänge einen hohen Fahrkomfort gewährleisten.

Das erfindungsgemäße Verfahren zum Anfahren mit zwei Kupplungen, die so gesteuert werden, dass immer mindestens eine Kupplung geschlossen, also aktiv geschaltet ist, bietet den Vorteil, dass der Fahrkomfort noch weiter erhöht wird. Durch die spezielle Art des Gangwechsels von der höheren Übersetzung im 1. Gang zur niedrigeren Übersetzung im 2. Gang wird gleichzeitig eine sowohl sportliche als auch komfortable Anfahrt möglich. Vorbild ist hierbei das Anfahrverhalten eines hydrodynamischen Drehmomentwandlers, wobei das erfindungsgemäße Anfahren gegenüber dem Drehmomentwandler den Vorteil aufweist, dass durch die variable Ansteuerung der beiden Kupplungen zusammen mit einer sehr kurz ausgelegten Übersetzung des 1. Ganges ein sehr flexibles Anfahrverhalten von sehr komfortablen bis sehr sportlichen Anfahrten möglich ist.

Während des gesamten Anfahrvorganges ist ein harmonischer Verlauf der Zugkraft beim Schalten vom 1. in den 2. Gang gegeben, wodurch Zugkrafteinbrüche durch den Schaltvorgang vom 1. Gang in den 2. Gang vermieden werden, was auch zu einer Entlastung der Bauteile von mechanischem Verschleiß führt.

Das erfindungsgemäße Verfahren ist in den Zeichnungen dargestellt und in den nachfolgenden Beschreibungen näher erläutert.

Es zeigen
- Fig. 1: die einzelnen Verfahrensschritte des erfindungsgemäßen Verfahrens
- Fig. 2: eine Prinzipdarstellung des Drehmoment- und Drehzahlverlaufs während des Anfahrvorganges bei Komfortanfahrt und
- Fig. 3: eine Prinzipdarstellung des Drehmoment- und Drehzahlverlaufs während des Anfahrvorganges bei Volllastanfahrt.

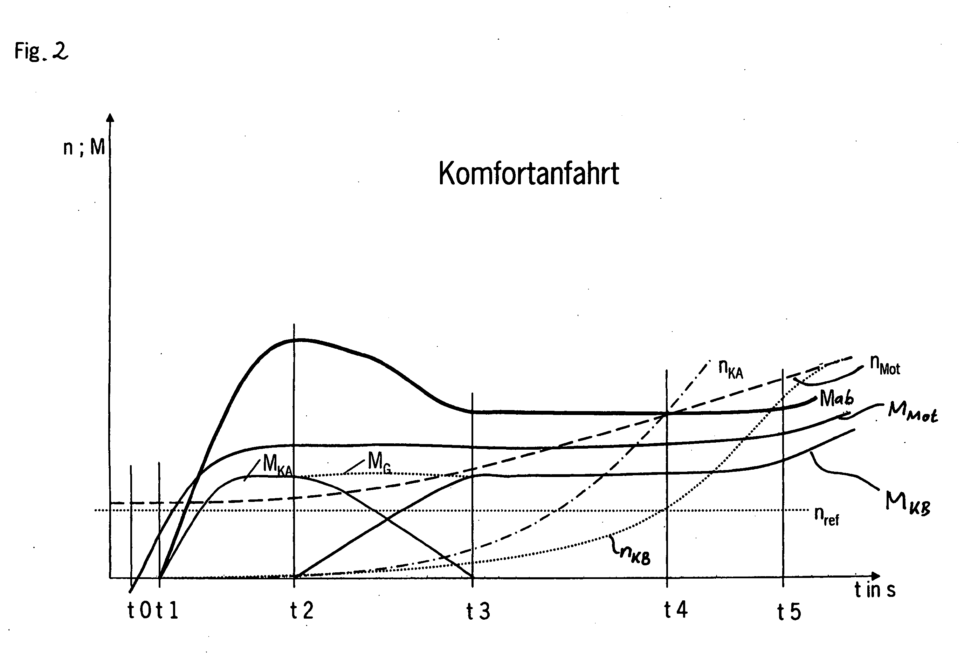

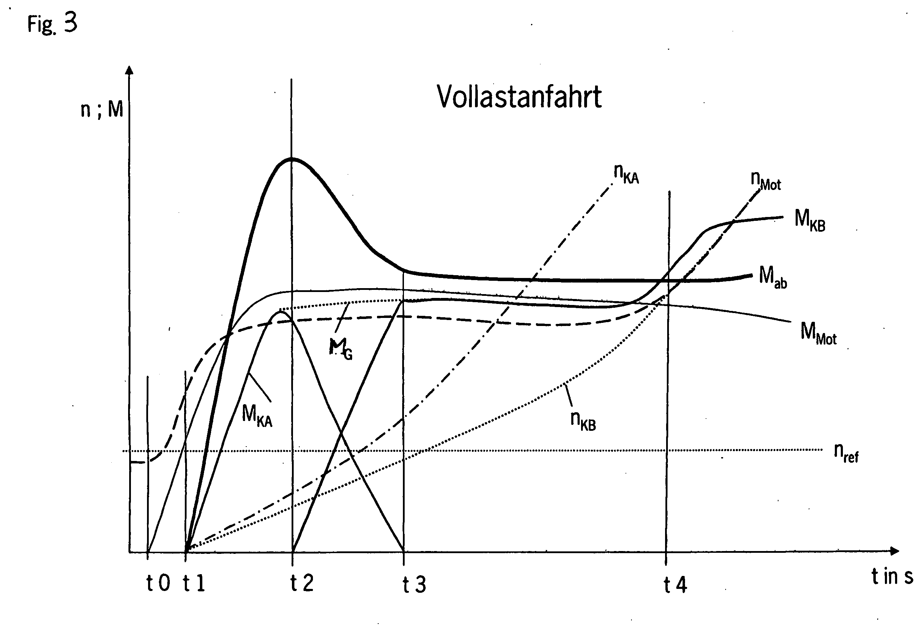

Die Drehmomenten- und Drehzahlverläufe über die Zeit, wobei die Figur 2 die Darstellung einer Komfortanfahrt und Figur 3 die Darstellung einer Volllastanfahrt ist, verwenden gleiche Bezugszeichen für gleiche Kurvenverläufe.

Es sind folgende Kurvenverläufe dargestellt.
- n_{KA}: Drehzahl an erster Kupplung KA
- n_{KB}: Drehzahl an zweiter Kupplung KB
- n_{Mot}: Motordrehzahl
- n_{ref}: Referenzdrehzahl
- M_{KA}: Moment erste Kupplung KA
- M_{KB}: Momente zweite Kupplung KB
- M_{Mot}: Motormoment
- M_{ab}: Moment Abtrieb
- M_{G}: Gesamtmoment am Abtriebsstrang

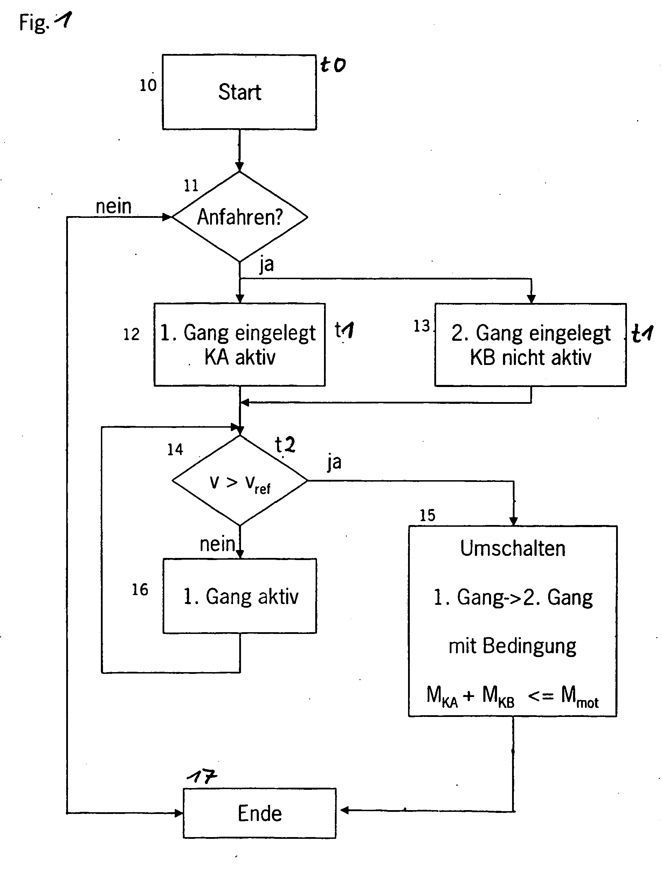

In Fig. 1 ist der Ablaufplan des Verfahrens dargestellt, wobei zunächst beim Start des Anfahrvorganges zum Zeitpunkt t0 in einem Verfahrensschritt 10 dem Getriebesteuergerät die verschiedenen Betriebsparameter wie beispielsweise Drehzahl n_{Mot}, der Drosselklappenwinkel, das Motormoment M_{Mot}, die Last L und der Druck p zugeführt werden. Diese Betriebsparameter werden in der Regel sowieso von bereits vorhandenen in den Figuren nicht dargestellten, Sensoren erfasst und liegen somit in der Brennkraftmaschine vor, so dass sie dem Getriebesteuergerät nur z.B. über ein entsprechendes Bussystem zugeführt werden müssen.

Im nachfolgenden Arbeitsschritt 11 wird geprüft, ob ein Anfahrvorgang gestartet wird. Dies erfolgt beispielsweise bei eingeschalteter Zündung, Geschwindigkeit des Fahrzeuges von 0 km/h und betätigtem Gaspedal.

Mit Beginn des Anfahrvorgangs zum Zeitpunkt t1 wird im Arbeitsschritt 12 in einer ersten Kupplung KA der erste Gang eingelegt und durch Schließen diese ersten Kupplung KA aktiv geschaltet. Damit wird das Drehmoment des Motors M_{Mot} über das Moment der Kupplung M_{KA} auf die Antriebswelle als Abtriebsmoment M_{ab} für den Anfahrvorgang übertragen, wobei für ein hohes Anfahrmoment die Anfahrübersetzung sehr hoch auszulegen ist. Zur Ausnutzung der maximalen Zugkraft und Minimierung der Kupplungsbelastung wird grundsätzlich im 1. Gang angefahren. Die Drehzahl des Motors n_{Mot} erhöht sich beim Anfahren dabei zunächst mit der Fahrgeschwindigkeit.

Wie in den Figuren 2 und 3 dargestellt, beginnt zum Zeitpunkt t1 die Kurve M_{ab}, die das Moment, welches für den Anfahrvorgang auf die Räder übertragen wird, mit Schließen der Kupplung KA und zunehmenden Moment M_{KA} anzusteigen. Damit erfolgt die Kraftübertragung für den Anfahrvorgang an das Fahrwerk.

Wie Figur 1 zeigt und den Darstellungen der Figuren 2 und 3 zu entnehmen ist, wird schon deutlich vor dem Erreichen der eigentlichen Schaltdrehzahl oder bereits gleichzeitig mit dem Einlegen des 1. Gang im Arbeitsschritt 13 im zweiten Teilgetriebe der 2. Gang eingelegt. Bei der Darstellung der Komfortanfahrt in Figur 2 ist zu sehen, dass zunächst kein Moment durch zweite Kupplung KB übertragen wird, so dass auch die Kurve M_{KB} bis zum Zeitpunkt t2 annähernd Null ist. Der Unterschied zur Volllastanfahrt in Figur 3 wird später erläutert.

Das bedeutet, mit dem Aktivschalten des 1. Ganges in der ersten Kupplung KA ist in der zweiten Kupplung KB der 2. Gang eingelegt, der jedoch nicht aktiv geschaltet wird, wie in den Arbeitsschritten 12 und 13 und in den Figuren 2 und 3 mit dem Abschnitt t1 bis t2 dargestellt.

Während des Anfahrvorganges wird die Geschwindigkeit v mit einer vorgebbaren Referenzgeschwindigkeit v_{ref} verglichen. Dies ist in dem Ablaufplan der Figur 1 durch den Verfahrensschritt 14 dargestellt. Überschreitet die aktuelle Geschwindigkeit v diesen vorgebbaren Referenzwert vᵣₑᵥ, so erfolgt im nachgeordneten Verfahrensschritt 15 das Schalten vom 1. in den 2. Gang. In den Figuren 2 und 3 ist die Bedingung zum Zeitpunkt t2 erfüllt und es beginnt mit t2 der Umschaltvorgang.

So zeigt Fig. 2, dass noch während die erste Kupplung KA geöffnet wird und der 1. Gang inaktiv geschaltet wird, parallel dazu die zweite Kupplung KB schließt und den 2. Gang aktiv schaltet. Das über den 1. Gang übertragene Moment M_{KA} wird dabei gleichzeitig im selben Maße reduziert, wie das Moment M_{KB} des 2. Gangs zunimmt. Das vom Motor aufzubringende Moment M_{Mot} muss während des Schaltvorganges über den von den Kupplungen aufgenommenen Gesamtmoment beider Kupplungen M_{G} liegen, damit es nicht zu einer Verringerung der Motordrehzahl n_{Mot} kommt. Das höchste Getriebeausgangsmoment wird dabei durch die Übertragung des Motormoments im 1. Gang erzielt und nicht durch eine Verringerung der Motordrehzahl beim Einkuppeln des 2. Ganges. Der Gangwechsel erfolgt in einem längeren Zeitintervall als bei üblichen Schaltvorgängen und der Gangwechsel erfolgt für den Fahrer im wesentlichen unmerklich. In den Figuren 2 und 3 ist der Gangwechsel zum Zeitpunkt t3 abgeschlossen.

Wurde in der Abfrage 14 der Figur 1 festgestellt, dass die aktuelle Geschwindigkeit v kleiner ist als die Referenzgeschwindigkeit v_{ref}, führt der Verfahrensschritt 14 an den Verfahrensschritt 16 und der 1. Gang bleibt aktiv geschaltet, die erste Kupplung KA wird noch nicht geöffnet.

Nach dem Umschaltvorgang im Verfahrensschritt 15 wird dieser Modus des Anfahrvorganges verlassen, wie dies mit dem Schritt 17 dargestellt ist.

Den Diagrammen in Figur 2 und 3 ist zu entnehmen, dass die Motordrehzahl n_{Mot} während des gesamten Vorgangs des Anfahrens monoton ansteigt. Die Drehzahl n_{KA} der ersten Kupplungen KA und die Drehzahl n_{KB} der zweiten Kupplung KB steigen zeitversetzt an.

Das erfindungsgemäße Verfahren hat den Vorteil, dass während des Anfahrvorgangs zunächst die maximale Kraft des ersten Ganges zur Verfügung steht und damit ein hohes Radmoment gewährleistet ist. Der stufenlose Übergang vom ersten zum zweiten Gang ist vergleichbar mit dem Verhalten eines Wandlers mit seiner realisierbaren Momentüberhöhung.

Die Reibleistung an der Kupplung beim Anfahren wird durch die Ausnutzung der hohen Anfahrübersetzung niedrig gehalten. Dies ist insbesondere für schwere Fahrzeuge von Nutzen.

Der Unterschied der Komfortanfahrt gemäß Figur 2 zur Volllastanfahrt gemäß Figur 3 wird deutlich, wenn man die Kurve M_{ab} für das Abtriebsmoment betrachtet. Diese Kurve steigt wesentlich stärker an, so dass die Kraft und Momentenübertragung hier viel schneller erfolgt. Die gesamten Vorgänge zum Umschalten vom 1. auf 2. Gang sind in kürzeren Zeitabständen realisiert.

## Patentansprüche

1. Verfahren zur Realisierung eines Anfahrvorganges einer Brennkraftmaschine mit einer Antriebseinheit, einem Getriebe mit wenigstens zwei Getriebeeingangswellen und einer Doppel-Kupplungseinrichtung und einem Steuergerät zur Ansteuerung des Getriebes, wobei beim Erkennen eines Anfahrvorganges in einer ersten Kupplung (KA) der Doppel-Kupplungseinrichtung der 1. Gang eingelegt und aktiv geschaltet wird, während in einer weiteren Kupplungseinrichtung (KB) der Mehrfachkupplung der 2. Gang eingelegt jedoch nicht aktiv geschaltet wird, **dadurch gekennzeichnet, daß** während des Anfahrvorgangs laufend eine aktuelle Referenzgröße erfasst und mit einer vorgebbaren Referenzgröße verglichen wird, wobei beim Überschreiten dieser vorgebbaren Referenzgröße das Steuergerät ein Öffnen der ersten Kupplung (KA) und damit ein Inaktivschalten des 1. Ganges bewirkt, während parallel dazu die zweite Kupplung (KB) geschlossen und somit der 2. Gang aktiv geschaltet wird, wobei das an der Antriebseinheit angreifende Moment sich aus der Summe der am Motor angreifenden Momente der Kupplungen (KA, KB) ergibt während des Schaltvorganges annähernd konstant ist und kleiner oder gleich dem aktuellen Motormoment ist und wobei die Motordrehzahl (n_{Mot}) während des gesamten Vorgangs des Anfahrens monoton ansteigt.

2. Verfahren nach Anspruch 1, **dadurch gekennzeichnet, dass** die Referenzgröße die Geschwindigkeit (v) ist.

3. Verfahren nach Anspruch 1, **dadurch gekennzeichnet, dass** ein Anfahrvorgang erkannt wird, wenn zumindest die Zündung eingeschaltet ist und die Geschwindigkeit der Brennkraftmaschine im wesentlichen 0 Km/h beträgt.

4. Verfahren nach Anspruch 1, **dadurch gekennzeichnet, dass** die vorgebbare Referenzgröße eine vorgebbare Referenzgeschwindigkeit (v_{ref}) ist und dieser vorgebbare Wert in Abhängigkeit der Drehzahlverläufe von Motor und Kupplung beispielsweise in der Applikation ermittelt wird.

## Claims

1. Method for carrying out a starting process in an internal combustion engine with a drive unit, a transmission with at least two transmission input shafts and one double clutch device and a control device for actuating the transmission, wherein when a starting process is detected the first gear speed is engaged in a first clutch (KA) of the double clutch device and is activated, while the second gear speed is engaged in a further clutch device (KB) of the multiple clutch but not activated, **characterized in that** during the starting process a current reference variable is continuously detected and compared with a predefinable reference variable, wherein when this predefinable reference variable is exceeded the control device causes the first clutch (KA) to be opened and thus causes the first gear speed to be deactivated while, in parallel with this, the second clutch (KB) is closed and the second gear speed is thus activated, wherein the torque which acts on the drive unit is produced from the sum of the torques of the clutches (KA, KB) acting on the engine, is approximately constant during the shifting process and is less than or equal to the current engine torque and wherein the engine speed (n_{Mot}) rises monotonously during the entire starting process.

2. Method according to Claim 1, **characterized in that** the reference variable is the velocity (v).

3. Method according to Claim 1, **characterized in that** a starting process is detected if at least the ignition is switched on and the velocity of the internal combustion engine is essentially 0 Km/h.

4. Method according to Claim 1, **characterized in that** the predefinable reference variable is a predefinable reference velocity (v_{ref}), and this predefinable value is determined as a function of the engine speed profiles of the engine and clutch, for example in the application.

## Revendications

1. Procédé pour mettre en oeuvre une opération de démarrage d'un moteur à combustion interne avec une unité d'entraînement, une boîte de vitesses avec au moins deux arbres d'entrée de boîte de vitesses et un dispositif à double embrayage, et un appareil de commande pour la commande de la boîte de vitesses, dans lequel, une fois qu'une opération de démarrage a été reconnue, la première vitesse est enclenchée dans un premier embrayage (KA) du dispositif à double embrayage, et est activée, tandis que dans un autre dispositif d'embrayage (KB) de l'embrayage multiple, la deuxième vitesse est enclenchée mais n'est pas activée, **caractérisé en ce que** pendant l'opération de démarrage, une valeur de référence actuelle est détectée en continu, et est comparée à une valeur de référence prédéfinissable, et lors du dépassement de cette valeur de référence prédéfinissable, l'appareil de commande provoquant une ouverture du premier embrayage (KA) et donc une désactivation de la première vitesse, tandis que parallèlement à cela, le deuxième embrayage (KB) est fermé et donc la deuxième vitesse est activée, le couple s'appliquant à l'unité d'entraînement s'obtenant à partir de la somme des couples des embrayages (KA, KB) s'appliquant au moteur, étant approximativement constant pendant l'opération de changement de vitesse et inférieur ou égal au couple moteur actuel, et le régime du moteur (n_{Mot}) augmentant de manière monotone pendant toute l'opération de démarrage.

2. Procédé selon la revendication 1, **caractérisé en ce que** la valeur de référence est la vitesse (v).

3. Procédé selon la revendication 1, **caractérisé en ce qu'**une opération de démarrage est reconnue lorsqu'au moins l'allumage est initié, et que la vitesse du moteur à combustion interne vaut essentiellement 0 km/h.

4. Procédé selon la revendication 1, **caractérisé en ce que** la valeur de référence prédéfinissable est une vitesse de référence prédéfinissable (V_{ref}) et cette valeur prédéfinissable est déterminée en fonction des allures du régime du moteur et de l'embrayage par exemple pendant l'application.
